# FASCICULE DE BREVET EUROPEEN

(11) **EP 4 074 662 B1**
(45) Date de publication et mention de la délivrance du brevet: **04.11.2026**
(21) Numéro de dépôt: 22168656.1
(22) Date de dépôt: 15.04.2022
(51) Int. Cl.: C02F 1/02, C02F 103/00

(54) **PROCÉDÉ DE DÉCONTAMINATION ET INSTALLATION ASSOCIÉE**
DEKONTAMINATIONSVERFAHREN UND ENTSPRECHENDE ANLAGE
DECONTAMINATION METHOD AND ASSOCIATED INSTALLATION

(30) Priorité: 16.04.2021 FR 2103976
(43) Date de publication de la demande: 19.10.2022
(73) Titulaire: Actini, 74500 Maxilly Sur Leman (FR)
(72) Inventeur:
(74) Mandataire: Innovincia

(56) Documents cités:
- EP-A1- 0 346 282
- DE-A1- 10 024 447
- US-A1- 2007 131 603
- US-A1- 2019 111 166
- US-B2- 8 034 289

## Description

La présente invention concerne une installation de décontamination d'un fluide, tel qu'un liquide, contaminé par des agents pathogènes. L'invention concerne également un procédé de décontamination mis en œuvre par une telle installation de décontamination.

L'invention s'applique notamment dans le cadre des installations de décontamination de liquides ou effluents pathogènes contaminés par des germes ou agents infectieux tels que des virus, des bactéries, des parasites comme des protozoaires ou des helminthes, des protéines de type prions, ou encore des organismes génétiquement modifiés.

Dans l'industrie pharmaceutique ou les laboratoires, en particulier dans les laboratoires utilisant des microorganismes pathogènes de classe 1, 2, 3 ou 4, aussi nommés laboratoires P1, P2, P3 ou P4, la fabrication par exemple de vaccins ou la recherche et développement sur certaines maladies infectieuses, génère des produits secondaires tels que des effluents pathogènes.

De tels effluents pathogènes doivent être décontaminés de façon sûre avant tout rejet par exemple dans le réseau des eaux usées, c'est-à-dire qu'après traitement, les germes ou agents infectieux doivent être rendus inoffensifs. Ceci peut se faire par exemple en chauffant les effluents dans une cuve hermétique à une température par exemple entre 121°C et 140°C et en maintenant cette température pendant quelques minutes.

De façon connue, le traitement thermique pour la décontamination peut se faire en continu ou par lot, aussi nommé mode Batch en anglais. L'invention s'applique plus particulièrement aux installations de décontamination fonctionnant en mode Batch.

Une telle installation comprend classiquement une cuve de stockage permettant de recueillir le fluide à décontaminer, une unité de décontamination avec une cuve de traitement thermique remplie à partir de la cuve de stockage et un dispositif de chauffage du fluide afin de le décontaminer, et généralement un dispositif de refroidissement permettant de refroidir le fluide décontaminé évacué de la cuve de traitement thermique avant son rejet par exemple dans le réseau des eaux usées.

Toutefois, dans de telles installations le temps de chauffe du fluide à décontaminer dans la cuve de traitement thermique ainsi que le temps de son refroidissement limitent la quantité d'effluents pouvant être traitée en une journée. De plus, les installations connues sont très énergivores et coûteuses, et les temps de cycles sont très longs.

Notamment, l'énergie consommée par cycle est très importante au vu de l'écart important de température entre la phase de chauffe, de la température ambiante jusqu'à une température comprise entre 121°C et 140°C, et la phase de refroidissement, depuis la consigne de traitement thermique vers 35°C à 50°C. Les requis de cadence importante imposés à ces systèmes privilégient des phases de chauffe et de refroidissement courtes, ce qui nécessite des puissances très importantes. De plus, les équipements de chauffe et de refroidissement doivent généralement être surdimensionnés, par exemple jusqu'à dix fois la puissance journalière lissée consommée par l'installation.

En outre, une pompe est généralement disposée au niveau de la sortie de fluide de la cuve de traitement thermique, de manière à assurer l'évacuation du liquide décontaminé ce qui ajoute à la consommation énergétique et à son coût pour sa mise en place et sa maintenance.

Afin de réduire l'énergie consommée, il a été proposé des installations permettant une récupération d'énergie, qui peut être valorisée lors de la phase de chauffe et de refroidissement.

Toutefois, les solutions connues ne donnent pas satisfaction.

En effet, l'installation de décontamination nécessite deux unités de décontamination complètes avec les cuves de traitement thermique, les dispositifs de chauffage, les vannes et moyens de contrôle pour la circulation du fluide, et en outre un échangeur thermique pour la récupération d'énergie.

Cet échangeur thermique est agencé de façon à être traversé par le fluide contaminé en direction d'une cuve de traitement thermique, tandis que le fluide décontaminé après chauffage dans l'autre cuve de traitement thermique circule également à contre-courant au sein de l'échangeur thermique. En d'autres termes, pendant la vidange de l'une des cuves de traitement thermique à travers l'échangeur thermique, l'autre cuve de traitement thermique est remplie de fluide contaminé circulant au préalable dans l'échangeur thermique afin d'être réchauffé par le fluide décontaminé à contre-courant.

Or, cette installation est assez onéreuse étant donné la contrainte de doubler les unités de décontamination pour permettre la circulation à contre-courant des fluides à températures différentes au sein de l'échangeur thermique pendant la vidange et le remplissage.

Les deux cuves de traitement thermique doivent fonctionner ensemble car elles sont liées par le processus de récupération d'énergie au sein de l'échangeur thermique. Il n'y a pas de redondance. Cela requiert, une synchronisation de la vidange de l'une des cuves de traitement thermique et du remplissage de l'autre. Les débits de vidange et de remplissage doivent être régulés de sorte que les temps de vidange et remplissage soient égaux et que du fluide circule dans les deux sens au sein de l'échangeur thermique.

Cependant, les débits de remplissage et de vidange ne sont généralement parfaitement pas synchronisés, de sorte que le remplissage de l'une des cuves de traitement thermique se termine souvent avant la vidange de l'autre, de sorte qu'il n'y a alors aucune récupération d'énergie sur la fin de la vidange. De plus, lorsque le dernier cycle de décontamination est exécuté, une seule cuve de traitement thermique opère pour cette décontamination, et aucune récupération d'énergie n'est réalisable. Il en résulte que le refroidissement du fluide décontaminé peut reposer principalement, voire intégralement, sur le dispositif de refroidissement final, qui est donc indispensable.

Par ailleurs, cette installation nécessite l'utilisation d'une pompe, notamment une pompe centrifuge, pour faire circuler les fluides contaminés et permettre le remplissage des cuves de traitement thermique. La pompe est un élément défaillant qui peut poser un problème de sécurité par exemple en cas de défaillance d'étanchéité de la pompe, et qui de plus est source de bruit.

La présente invention a pour objectif de pallier au moins partiellement les inconvénients de l'art antérieur exposés ci-dessus en proposant une installation de décontamination avec une récupération d'énergie améliorée, permettant d'optimiser l'échange thermique tout en réduisant les coûts d'une telle installation. Un autre objectif de l'invention est de limiter l'utilisation d'éléments défaillants pour faire circuler les fluides potentiellement pathogènes. L'invention a aussi pour objectif de faciliter la mise en place et la maintenance d'une telle installation.

Des installations d'échange thermique conformes à l'état de la technique et présentant les limitations mentionnées ci-dessus sont décrites, par exemple, dans US2007/131603A1, EP0346282A1, DE10024447A1, US8034289B2, US2019/111166 A1.

À cet effet, l'invention concerne un procédé de décontamination d'un fluide, tel qu'un liquide, contaminé par des agents potentiellement pathogènes au sein d'une installation de décontamination. L'installation de décontamination comprend :
- au moins une cuve de stockage du fluide contaminé,
- une unité de décontamination comprenant au moins une cuve de traitement thermique et un dispositif de chauffage du fluide contaminé contenu dans la cuve de traitement thermique,
- un dispositif d'échange thermique entre le fluide contaminé et le fluide décontaminé chauffé, comportant d'une part une enceinte raccordée fluidiquement à la cuve de stockage et d'autre part un canal de circulation de fluide, raccordé fluidiquement à une sortie de fluide de la cuve de traitement thermique et agencé en contact thermique avec l'enceinte, et
- une unité de contrôle configurée pour mettre en œuvre une phase de récupération d'énergie.

Ledit procédé comporte les étapes suivantes :
- remplir l'enceinte du dispositif d'échange thermique avec le fluide contaminé en provenance de la cuve de stockage,
- remplir la cuve de traitement thermique avec le fluide contaminé en provenance de l'enceinte du dispositif d'échange thermique ou de la cuve de stockage,
- chauffer le fluide contaminé contenu à l'intérieur de la cuve de traitement thermique jusqu'à atteindre une température prédéfinie, pendant une durée prédéfinie, de façon à décontaminer ledit fluide,
- activer une phase de récupération d'énergie de ladite installation comprenant les sous-étapes suivantes : isoler fluidiquement l'enceinte remplie de fluide contaminé et évacuer le fluide chauffé décontaminé en sortie de la cuve de traitement thermique à travers le canal de circulation du dispositif d'échange thermique, agencé en contact thermique avec l'enceinte, de façon à réchauffer le fluide contaminé contenu dans l'enceinte par le fluide décontaminé chauffé,
- remplir la cuve de traitement thermique avec le fluide contaminé préchauffé au sein de l'enceinte du dispositif d'échange thermique lors de la phase de récupération d'énergie.

La phase de récupération d'énergie est activée après au moins une itération de l'étape de chauffage pour décontaminer ledit fluide.

La température prédéfinie est par exemple comprise entre 121°C et 140°C. La durée prédéfinie peut être inférieure à 10 minutes.

Les étapes dudit procédé peuvent être réitérées jusqu'à un dernier cycle de décontamination. L'invention a également pour objet une installation de décontamination d'un fluide, tel qu'un liquide, contaminé par des agents potentiellement pathogènes.

Ladite installation est configurée pour mettre en œuvre au moins en partie ledit procédé tel que défini précédemment.

Ladite installation comprend au moins : une cuve de stockage du fluide contaminé, une unité de décontamination comprenant au moins une cuve de traitement thermique configurée pour recevoir le fluide contaminé et un dispositif de chauffage du fluide contaminé contenu dans la cuve de traitement thermique, de façon à décontaminer ledit fluide, et un dispositif d'échange thermique entre le fluide contaminé et le fluide décontaminé chauffé.

Selon l'invention, le dispositif d'échange thermique comporte d'une part une enceinte raccordée fluidiquement à la cuve de stockage de façon à être remplie par le fluide contaminé en provenance de la cuve de stockage, et d'autre part un canal de circulation de fluide raccordé fluidiquement à une sortie de fluide de la cuve de traitement thermique et agencé en contact thermique avec l'enceinte. Ladite installation comporte une unité de contrôle configurée pour mettre en œuvre une phase de récupération d'énergie, en isolant fluidiquement l'enceinte remplie de fluide contaminé et en évacuant le fluide décontaminé chauffé en sortie de la cuve de traitement thermique à travers le canal de circulation. Ceci permet de réchauffer le fluide contaminé contenu dans l'enceinte. Lorsque l'enceinte est isolée fluidiquement, l'écoulement du fluide contaminé est arrêté depuis et vers l'enceinte. Le fluide contaminé stocké dans le volume défini par l'enceinte est donc statique. L'écoulement dans le canal de circulation du fluide décontaminé, après chauffage, permet de récupérer la chaleur de ce fluide décontaminé pour réchauffer le fluide contaminé froid statique contenu dans l'enceinte. Le dispositif d'échange thermique assure ainsi une récupération d'énergie semi-statique, ou statico-dynamique, par opposition à un échange thermique par circulation à contre-courant des deux fluides.

L'installation de décontamination peut en outre comporter une ou plusieurs caractéristiques suivantes décrites ci-après, prises séparément ou en combinaison.

Le dispositif d'échange thermique peut présenter une première partie, dite haute, disposée en hauteur par rapport à une deuxième partie, dite basse.

Le canal de circulation peut présenter une entrée de fluide ménagée dans la deuxième partie basse et une sortie de fluide ménagée dans la première partie haute.

Le fluide décontaminé chaud rentre dans la partie basse du canal de circulation et ressort en partie haute. Ainsi, du fait de la convection naturelle, la partie la plus froide du fluide contaminé contenu dans l'enceinte se place en partie basse de l'enceinte, permettant d'obtenir un écart de température important avec le fluide décontaminé chauffé entrant dans le canal de circulation, de façon à optimiser l'échange thermique et la récupération d'énergie.

Selon l'invention l'enceinte définit un volume de stockage égal ou sensiblement égal au volume de stockage défini par la cuve de traitement thermique.

Le volume de stockage défini par l'enceinte peut être égal à +/-10% au volume de stockage défini par la cuve de traitement thermique.

Selon un mode de réalisation, ladite installation comporte au moins une première vanne agencée en communication fluidique avec une entrée de fluide de l'enceinte et une deuxième vanne agencée en communication fluidique avec une sortie de fluide de l'enceinte, lesdites vannes étant configurées pour prendre une position fermée isolant fluidiquement l'enceinte, lors de la phase de récupération d'énergie.

Ladite installation peut comprendre au moins un élément déverseur raccordé fluidiquement à l'enceinte et à la cuve de stockage, en étant agencé en dérivation de la première vanne, l'élément déverseur étant configuré pour prendre une position autorisant un déversement d'un surplus de fluide contaminé contenu dans l'enceinte, en cas de dilatation dudit fluide lors de la phase de récupération d'énergie.

L'élément déverseur est par exemple une soupape.

Selon un autre aspect, ladite installation comporte au moins un élément de régulation du débit du fluide décontaminé en sortie du canal de circulation du dispositif d'échange thermique.

Selon un exemple de réalisation, il peut s'agir d'une vanne de régulation.

En alternative, il peut s'agir d'un élément fixe réduisant la section de passage du fluide décontaminé, tel qu'une rondelle percée.

Par exemple, la cuve de stockage peut être disposée en hauteur par rapport à l'enceinte du dispositif d'échange thermique et à la cuve de traitement thermique. Ainsi, la circulation du fluide contaminé en provenance de la cuve de stockage et en direction de l'enceinte et/ou de la cuve de traitement thermique peut être réalisée au moins en partie par gravité.

En variante ou en complément, ladite installation peut comporter un dispositif, telle qu'au moins une pompe, agencé et configuré pour assurer au moins partiellement le transfert du fluide, notamment du fluide contaminé.

Selon un agencement alternatif, la cuve de stockage peut être disposée au même niveau, à même hauteur, ou sensiblement au même niveau ou même hauteur, que l'enceinte du dispositif d'échange thermique et/ou la cuve de traitement thermique.

En particulier, l'enceinte peut être disposée en amont de la cuve de traitement thermique selon le sens de circulation du fluide contaminé.

La cuve de traitement thermique peut être raccordée fluidiquement à l'enceinte et être configurée pour être remplie par le fluide contaminé en provenance de l'enceinte.

Selon un premier mode de réalisation, le canal de circulation traverse l'enceinte. Ainsi, le canal de circulation est interne et l'enceinte est agencée autour du canal interne.

Selon un deuxième mode de réalisation, le canal de circulation peut être externe et disposé autour de l'enceinte.

De façon avantageuse, le canal de circulation présente une seule section de passage du fluide décontaminé.

Selon un aspect, le canal de circulation est dimensionné pour un écoulement du fluide décontaminé chauffé avec un nombre de Reynold supérieur à 5000.

Le canal de circulation est par exemple de forme générale tubulaire.

Le dispositif de chauffage peut comporter au moins un injecteur de vapeur d'eau sous pression agencé pour injecter de la vapeur d'eau sous pression à l'intérieur de la cuve de traitement thermique.

En variante ou en complément, le dispositif de chauffage peut comporter au moins élément chauffant électrique. Ledit au moins un élément chauffant électrique peut être fixé sur un côté extérieur du fond de la cuve de traitement thermique opposé à un côté intérieur destiné à être en contact avec ledit fluide.

Selon une première variante, l'unité de décontamination et le dispositif d'échange thermique sont réalisés par des systèmes différents.

Selon une deuxième variante, l'installation de décontamination comporte au moins deux unités de décontamination formant également dispositifs d'échange thermique. Selon la deuxième variante, les unités de décontamination comprennent respectivement d'une part une cuve de traitement thermique définissant également une enceinte configurée pour être isolée fluidiquement, et d'autre part un canal de circulation agencé en contact thermique avec la cuve de traitement thermique. Lesdites unités de décontamination sont agencées de sorte que le fluide décontaminé chauffé en sortie d'une unité de décontamination s'écoule dans le canal de circulation en contact thermique avec la cuve de traitement thermique de l'autre unité de décontamination lors d'une phase de récupération d'énergie.

D'autres avantages et caractéristiques de l'invention apparaîtront plus clairement à la lecture de la description suivante donnée à titre d'exemple illustratif et non limitatif, et des dessins annexés parmi lesquels :
[Fig. 1] est une vue d'ensemble schématisée d'un mode de réalisation d'une installation de décontamination.
[Fig. 2] est une représentation schématique d'un exemple de réalisation d'un dispositif d'échange thermique de l'installation de la figure 1.
[Fig. 3] est une représentation schématique de l'installation de la figure 1 lors d'une étape de remplissage d'une enceinte du dispositif d'échange thermique.
[Fig. 4a] et [Fig. 4b] sont des représentations schématiques de l'installation de la figure 1 lors d'une étape de remplissage d'une cuve de traitement thermique jusqu'à un niveau prédéterminé.
[Fig. 5] est une représentation schématique de l'installation de la figure 1 lors d'une étape de chauffe pour la décontamination du fluide contenu dans la cuve de traitement thermique.
[Fig. 6] représente de façon schématique une phase de récupération d'énergie au sein du dispositif d'échange thermique par circulation du fluide décontaminé chauffé en contact thermique avec le fluide à décontaminer statique.
[Fig. 7] représente de façon schématique une étape de remplissage de la cuve de traitement thermique avec le fluide à décontaminer, préchauffé lors de la phase de récupération d'énergie. Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

L'invention concerne la décontamination d'un fluide, tel qu'un liquide, contaminé par des agents potentiellement pathogènes, c'est-à-dire par des germes ou agents infectieux tels que des virus, des bactéries, ou encore des prions. Le fluide contaminé correspond par exemple à des produits secondaires tels que des effluents lors de la fabrication de vaccins.

### INSTALLATION

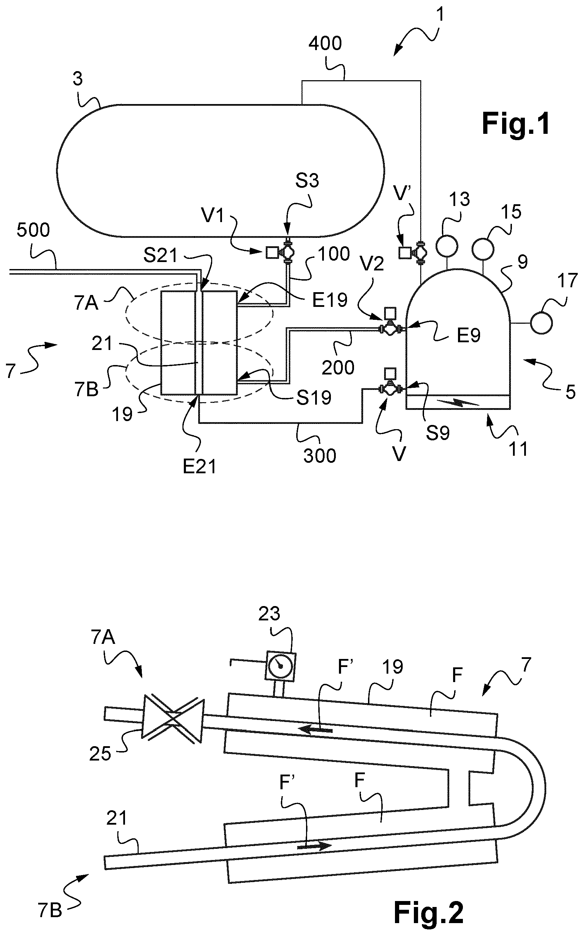

La figure 1 représente de façon simplifiée un mode de réalisation une installation de décontamination 1 selon l'invention.

L'installation 1 de décontamination comprend notamment une cuve de stockage 3 destinée à stocker le fluide contaminé, une unité de décontamination 5 et un dispositif d'échange thermique 7. L'installation 1 de décontamination comporte en outre une unité de contrôle (non représentée) configuré pour piloter une ou plusieurs étapes d'un procédé de décontamination décrit par la suite. La cuve de stockage 3 peut être raccordée à une ligne d'entrée de façon à recueillir le fluide contaminé issu par exemple d'une ligne de production tel qu'une ligne de production de vaccins. Cette cuve de stockage 3 fait office de tampon avant le traitement du fluide contaminé par lot (« Batch » en anglais). La cuve de stockage 3 est par exemple en acier inoxydable 316L. Tout autre matériau avec propriétés intéressantes en termes de résistance à la corrosion ou encore thermique peut être envisagé.

La cuve de stockage 3 présente au moins une sortie de fluide S3. Cette sortie de fluide S3 est avantageusement disposée au niveau du fond de la cuve de stockage 3. La sortie de fluide S3 de la cuve de stockage 3 est raccordée fluidiquement, par une canalisation 100, au dispositif d'échange thermique 7. À titre d'exemple non limitatif, le dispositif d'échange thermique 7 est disposé en dessous de la cuve de stockage 3, en référence au mode de réalisation particulier représenté sur la figure 1 et à l'orientation sur cette figure 1 correspondant à l'orientation réelle de l'installation de décontamination 1, de sorte qu'en fonctionnement, le fluide contaminé puisse se déverser par gravité au sein du dispositif d'échange thermique 7. Bien entendu, l'invention n'est pas limitée à un écoulement gravitaire du fluide notamment contaminé. En variante ou en complément, l'installation de décontamination 1 peut comporter un dispositif ou moyen par exemple mécanique agencé et configuré pour assurer au moins partiellement le transfert du fluide. Il peut s'agir d'au moins une pompe, ou encore de tout autre dispositif approprié. Le dispositif d'échange thermique 7 pourrait alors ne pas être disposé en-dessous de la cuve de stockage 3 mais par exemple à côté de celle-ci, c'est-à-dire au même niveau ou même hauteur que la cuve de stockage 3.

L'unité de décontamination 5 comprend au moins une cuve de traitement thermique 9 configurée pour recevoir le fluide contaminé. La destruction des agents infectieux contenus dans le fluide à décontaminer se fait généralement à une température de l'ordre de 121°C à 140°C. L'unité de décontamination 5 comporte à cet effet un dispositif de chauffage 11 du fluide contaminé contenu dans la cuve de traitement thermique 9.

Selon le mode de réalisation particulier représenté, la cuve de stockage 3 est disposée en hauteur par rapport à l'unité de décontamination 5 et au dispositif d'échange thermique 7, de sorte que le remplissage de la cuve de traitement thermique 9 depuis la cuve de stockage 3 peut se faire par gravité selon le principe des vases communicants. Bien entendu, l'invention n'est pas limitée à cet agencement et à un écoulement gravitaire. Comme dit précédemment, en variante ou en complément, au moins une pompe par exemple pourrait être utilisée pour assurer au moins partiellement le transfert du fluide, ou encore tout autre dispositif approprié. La cuve de stockage 3 pourrait ne pas être disposée au-dessus de l'unité de décontamination 5 et du dispositif d'échange thermique 7. Par exemple, la cuve de stockage 3 pourrait être agencée à côté ou au même niveau, du dispositif d'échange thermique 7 et/ou de l'unité de décontamination 5.

La cuve de traitement thermique 9, est par exemple réalisée en acier inoxydable, de préférence du type 316L.

Selon le mode de réalisation représenté, la cuve de traitement thermique 9 peut présenter une paroi latérale de forme générale cylindrique reliant un fond à une partie haute de la cuve de traitement thermique 9. La hauteur correspond à la direction d'extension principale de la paroi latérale de la cuve de traitement thermique 9. Le fond de la cuve de traitement thermique 9 peut présenter un côté dit intérieur destiné à être en contact avec le fluide à décontaminer à l'intérieur de la cuve de traitement thermique 9, et un côté extérieur opposé au côté intérieur. D'autre part, la partie haute de la cuve de traitement thermique 9 peut présenter une forme générale convexe, une forme de dôme.

La cuve de traitement thermique 9 comporte une entrée de fluide E9 et une sortie de fluide S9. L'entrée de fluide E9 est raccordée fluidiquement, par une canalisation 200, au dispositif d'échange thermique 7. Ceci permet d'alimenter la cuve de traitement thermique 9 en fluide contaminé ayant circulé dans le dispositif d'échange thermique 7.

La sortie de fluide S9 est avantageusement disposée au niveau du fond de la cuve de traitement thermique 9. La sortie de fluide S9 est raccordée fluidiquement à une entrée du dispositif d'échange thermique 7. Une canalisation de vidange 300 peut raccorder fluidiquement la sortie de fluide S9 de la cuve de traitement thermique 9 au dispositif d'échange thermique 7. Une vanne de vidange V peut être raccordée fluidiquement à la sortie de fluide S9, par exemple en étant disposée dans la canalisation de vidange 300. La vanne de vidange V est configurée pour prendre une position dite ouverte, permettant l'évacuation du fluide contenu à l'intérieur de la cuve de traitement thermique 9 en direction du dispositif d'échange thermique 7. Avantageusement, la vidange est effectuée à chaud, de façon à pouvoir récupérer cette énergie au sein du dispositif d'échange thermique 7 comme expliqué par la suite.

Afin de suivre l'évolution de la température à l'intérieur de la cuve de traitement thermique 9 et de vérifier que la température de consigne soit atteinte, la cuve de traitement thermique 9 peut comprendre au moins un capteur ou une sonde de température 13. La cuve de traitement thermique 9 peut également comprendre au moins une sonde de pression 15 afin de suivre l'évolution de la pression dans la cuve de traitement thermique 9, qui peut monter par exemple autour de 2 à 4,5 bars relatifs.

La cuve de traitement thermique 9 est par exemple destinée à être remplie à un niveau prédéterminé par le fluide à décontaminer. Elle est notamment destinée à remplie à une hauteur laissant libre un volume gazeux de compression, en particulier un dôme gazeux de compression.

La cuve de traitement thermique 9 peut comporter à cet effet au moins un capteur de niveau de remplissage 17.

Ainsi, le haut de la cuve de traitement thermique 9 en dôme peut servir de vase d'expansion lors de la chauffe.

En outre, l'installation de décontamination 1 peut comprendre, comme dans l'exemple illustré, une canalisation de délestage d'air 400 munie d'une vanne de sécurité V', raccordée au sommet de la cuve de traitement thermique 9, donc au niveau du dôme de la cuve de traitement thermique 9, et à la cuve de stockage 3.

Le dispositif de chauffage 11 peut être configuré pour assurer une chauffe directe ou indirecte du fluide à décontaminer contenu à l'intérieur de la cuve de traitement thermique 9. Le chauffage peut par exemple être électrique ou encore par vapeur.

A titre d'exemple, le dispositif de chauffage 11 peut comporter un ou plusieurs éléments chauffants électriques. Ledit au moins un élément chauffant électrique peut être fixé sur le côté extérieur du fond de la cuve de traitement thermique 9, de sorte qu'il n'est pas destiné à être en contact avec le fluide à décontaminer. L'élément chauffant électrique est par exemple réalisé plat et circulaire. Selon un autre exemple non représenté, le dispositif de chauffage 11 peut comporter au moins un injecteur de vapeur d'eau sous pression, par exemple de l'ordre de 5 bars ou 5.10⁵ Pa. A cet effet, l'injecteur (non représenté) peut être porté par une canne de support dont une extrémité est reliée via une vanne de commande à une conduite de vapeur d'eau sous pression. Un tel injecteur (non représenté) peut être agencé pour injecter de la vapeur d'eau sous pression à l'intérieur de la cuve de traitement thermique 9.

L'injecteur (non représenté) peut être disposé de manière à plonger dans le fluide contaminé lorsque la cuve de traitement thermique 9 est remplie. L'injecteur (non représenté) est avantageusement agencé de manière à créer un mouvement cyclonique du fluide à décontaminer lorsque de la vapeur d'eau sous pression est injectée. Par exemple, il peut être dirigé vers l'intérieur de la cuve de traitement thermique 9 avec au moins une composante tangentielle, voir complètement tangentiellement, par rapport à la paroi cylindrique de la cuve de traitement thermique 9. Par composante tangentielle, il faut comprendre une composante perpendiculaire à une direction radiale par rapport à l'axe de révolution de la cuve de traitement thermique 9.

En alternative, l'injecteur (non représenté) peut être agencé pour une chauffe indirecte du fluide contaminé destiné à être contenu à l'intérieur de la cuve de traitement thermique 9, c'est-à-dire sans plonger dans le fluide à décontaminer. Il peut être agencé de manière à injecter la vapeur d'eau selon une direction tangentielle à la paroi latérale de la cuve de traitement thermique 9.

Le dispositif d' échange thermique 7 est, quant à lui, configuré pour permettre un échange thermique entre le fluide contaminé, froid ou à température ambiante, et le fluide décontaminé chauffé en sortie de l'unité de décontamination 5.

Le dispositif d'échange thermique 7 comporte à cet effet au moins une enceinte 19 et un canal de circulation 21 de fluide, agencés en contact thermique.

Plus précisément, le dispositif d'échange thermique 7 est configuré pour permettre un préchauffage du fluide contaminé destiné à être contenu dans l'enceinte 19 par échange thermique avec le fluide décontaminé destiné à s'écouler dans le canal de circulation 21 après avoir été chauffé au sein de la cuve de traitement thermique 9, lors d'une phase de récupération d'énergie qui sera développée par la suite. Le fluide décontaminé en sortie du canal de circulation 21 est quant à lui destiné à être refroidi.

L'enceinte 19 présente avantageusement une forme générale dépourvue de zone morte, de bras mort ou autre zone qui ne serait pas facilement accessible et donc lavable par circulation d'un produit chimique décontaminant. Selon le mode de réalisation décrit, l'enceinte 19 peut présenter une forme générale cylindrique. L'enceinte 19 peut présenter une forme générale tubulaire. Selon une alternative non représentée, l'enceinte 19 peut s'apparenter à une cuve. En particulier, l'enceinte 19 peut être formée par une cuve de traitement thermique 9 telle que décrite précédemment. L'enceinte 19 est par exemple réalisée en acier inoxydable.

Cette enceinte 19 définit un volume de stockage égal ou sensiblement égal au volume de stockage défini par la cuve de traitement thermique 9. Le volume de stockage défini par l'enceinte 19 peut être égal à +/-10% au volume de stockage défini par la cuve de traitement thermique 9.

L'enceinte 19 est destinée à contenir le fluide contaminé en provenance de la cuve de stockage 3. Pour ce faire, elle est raccordée fluidiquement à la cuve de stockage 3 de façon à être remplie par le fluide contaminé en provenance de la cuve de stockage 3. L'enceinte 19 comporte une entrée de fluide E19 raccordée à la cuve de stockage 3, plus précisément à sa sortie de fluide S3.

L'enceinte 19 est également raccordée fluidiquement à la cuve de traitement thermique 9. Elle comporte une sortie de fluide S19 raccordée à la cuve de traitement thermique 9, plus précisément à son entrée de fluide E9. Cela permet d'alimenter la cuve de traitement thermique 9 en fluide contaminé qui peut avantageusement avoir été préchauffé par la mise en œuvre de la phase de récupération d'énergie, comme développé par la suite.

L'enceinte 19 peut être agencée à même hauteur, ou sensiblement à même hauteur que la cuve de traitement thermique 9. L'enceinte 19 est disposée en amont de la cuve de traitement thermique 9 selon le sens de circulation du fluide contaminé.

La cuve de stockage 3 peut être disposée en hauteur par rapport à l'enceinte 19 et à la cuve de traitement thermique 9. Selon cet exemple de réalisation, la circulation du fluide contaminé en provenance de la cuve de stockage 3 de façon à alimenter l'enceinte 19 et la cuve de traitement thermique 9, est destiné à être réalisée par gravité. Il n'est pas nécessaire de prévoir un moyen mécanique comme une pompe pour réaliser le transfert de fluide de la cuve de stockage 3 vers la cuve de traitement thermique 19.

De façon alternative, le transfert de fluide, notamment du fluide contaminé depuis la cuve de stockage 3 vers la cuve de traitement thermique 19, peut ne pas se faire par gravité, ou ne pas uniquement se faire par gravité. Par exemple, au moins une pompe pourrait être utilisée pour assurer tout ou partie du transfert du fluide, ou encore tout autre dispositif ou moyen approprié. La cuve de stockage 3 pourrait être disposée à même hauteur ou sensiblement même hauteur que l'enceinte 19 et/ou la cuve de traitement thermique 9

L'enceinte 19 est en outre destinée à être isolée fluidiquement de façon à arrêter la circulation du fluide contaminé, afin que ce dernier reste statique ou sensiblement statique au sein de l'enceinte 19, durant la phase de récupération d'énergie. Autrement dit, le volume stockant le fluide contaminé est fermé contrairement aux échangeurs thermiques des solutions antérieures avec un volume de fluide contaminé ouvert, c'est-à-dire connecté au reste du circuit de fluide, sur tout l'échangeur thermique, de façon à permettre la circulation du fluide contaminé et du fluide décontaminé à contre-courant.

A cet effet, au moins deux vannes V1, V2 sont prévues.

Ces vannes V1, V2 sont agencées de façon à pouvoir, selon leur position, empêcher le passage du fluide contaminé via l'entrée de fluide E19 et la sortie de fluide S19, et ainsi isoler fluidiquement l'enceinte 19, ou au contraire autoriser le passage du fluide contaminé et permettre ainsi l'alimentation en fluide contaminé de l'enceinte ou de la cuve de traitement thermique 9.

Une première vanne V1 est agencée en communication fluidique avec l'entrée de fluide E19 de l'enceinte 19. Elle est disposée dans la canalisation 100 raccordant fluidiquement la cuve de stockage 3 à l'enceinte 19 du dispositif d'échange thermique 7. Et, une deuxième vanne V2 est agencée en communication fluidique avec la sortie de fluide S19 de l'enceinte 19. Elle est disposée dans la canalisation 200 raccordant l'enceinte 19 du dispositif d'échange thermique 7 à la cuve de traitement thermique 9. Ces vannes V1, V2 peuvent chacune prendre une position ouverte et une position fermée. Dans la position ouverte, le fluide peut circuler à travers la canalisation, et dans la position fermée le passage du fluide vers la canalisation est obturé.

Lorsque les première et deuxième vannes V1, V2 sont toutes deux dans la position fermée, elles isolent fluidiquement l'enceinte 19. Le remplissage de l'enceinte 19 en fluide contaminé est arrêté ainsi que l'alimentation en fluide contaminé de la cuve de traitement thermique 3. Les première et deuxième vannes V1, V2 forment des vannes d'alimentation.

De façon avantageuse, l'enceinte 19 est configurée de façon à pouvoir gérer une dilatation du fluide contaminé en son sein, lors de la préchauffe par échange thermique avec le fluide décontaminé chauffé.

Pour ce faire, en se référant également à la figure 2, au moins un élément déverseur 23 peut être prévu de façon à permettre l'évacuation d'un surplus de volume de fluide contaminé F contenu dans l'enceinte 19 vers la cuve de stockage 3. Il peut s'agir d'une soupape. L'élément déverseur 23 est par exemple raccordé fluidiquement à l'enceinte 19 et à la cuve de stockage 3, en étant agencé en dérivation, en bypasse, de la première vanne V1. Cet élément déverseur 23 est configuré pour prendre une position autorisant le déversement du surplus de fluide contaminé F contenu dans l'enceinte 19, en cas de dilatation lorsqu'il est préchauffé par échange thermique avec le fluide décontaminé F' s'écoulant à travers le canal de circulation 21. Cette variante est par exemple mise en œuvre lorsque l'enceinte 19 est remplie au maximum de sa capacité.

De façon alternative, la gestion de la dilatation du fluide contaminé F lors de la préchauffe, peut se faire par la compression d'un volume gazeux ou dôme gazeux, par exemple si l'enceinte 19 définit dans la partie haute 7A une forme de dôme.

Dans ce cas, de façon similaire à la cuve de traitement thermique 9 précédemment décrite, l'enceinte 19 est configurée pour être remplie en fluide contaminé F à un niveau de remplissage prédéterminé en laissant libre un volume gazeux de compression. L'enceinte 19 peut comporter à cet effet un capteur de niveau de remplissage.

Lors de la préchauffe du fluide contaminé F, du fait de la dilatation, le niveau de fluide contaminé F dans l'enceinte 19 peut augmenter, de sorte que le surplus vient comprimer le volume gazeux dans la partie haute de l'enceinte 19. Contrairement à la variante précédente, le surplus de fluide contaminé F dû à la dilatation est conservé dans l'enceinte 19.

En ce qui concerne le canal de circulation 21, il est destiné à être traversé par le fluide décontaminé F' chauffé en provenance de la cuve de traitement thermique 9. Pour ce faire, le canal de circulation 21 est raccordé fluidiquement à la sortie de fluide S9 de la cuve de traitement thermique 9.

Le canal de circulation 21 comporte une entrée de fluide E21 et une sortie de fluide S21.

Par ailleurs, en référence à l'orientation sur les figures 1 et 2, correspondant à l'orientation réelle de l'installation 1 de décontamination une fois mise en place, le dispositif d'échange thermique 7 présente une première partie 7A, dite haute, qui est disposée en hauteur par rapport à une deuxième partie 7B, dite basse. L'entrée de fluide E21 du canal de circulation 21 est ménagée dans la deuxième partie 7B basse et la sortie de fluide du canal de circulation 21 est ménagée dans la première partie 7A haute.

La vanne de vidange V en de la cuve de traitement thermique 9 peut être raccordée à l'entrée de fluide E21 du canal de circulation 21. Elle est configurée pour permettre une vidange, une évacuation du fluide décontaminé F' chauffé contenu dans la cuve de traitement thermique 9 à travers le canal de circulation 21.

Ainsi, le fluide décontaminé F' chauffé est destiné à rentrer dans la partie basse 7B du dispositif d'échange thermique 7 et ressortir en partie haute 7A. Par ailleurs, du fait de la convection naturelle, la partie la plus froide du fluide contaminé F statique contenu dans l'enceinte 19 se place en partie basse 7B. Ceci permet d'obtenir un écart de température important avec le fluide décontaminé F' chauffé entrant dans le canal de circulation 21.

Le canal de circulation 21 est dimensionné pour un écoulement dynamique, turbulent, du fluide décontaminé F' avec un nombre de Reynold supérieur à 5000. Contrairement au fluide contaminé F qui est statique ou sensiblement statique dans l'enceinte 19, pendant l'échange thermique, le fluide décontaminé F' destiné à s'écouler de façon dynamique dans le canal de circulation 21. Le dispositif d'échange thermique 7 permet donc une récupération d'énergie de façon semi-statique. Ainsi, la convection naturelle dans l'enceinte 19 permettant de conserver la partie la plus froide du fluide contaminé F en contact thermique avec la partie la plus chaude du fluide décontaminé F', l'importance de l'écart de température entre le fluide décontaminé F' chaud et le fluide contaminé F froid, et la convection forcée du fluide décontaminé F' chaud qui s'écoule de façon dynamique, permettent d'optimiser l'échange thermique et en conséquence la récupération d'énergie pour le préchauffage du fluide contaminé F dans l'enceinte 19.

Le canal de circulation 21 peut être réalisé dans le même matériau que l'enceinte 19. Il est par exemple réalisé en acier inoxydable.

Le canal de circulation 21 peut être de forme générale tubulaire.

La forme du canal de circulation 21 tel que représenté sur la figure 2, avec une portion coudée générant un tour du fluide décontaminé F' chauffé, n'est qu'un exemple de réalisation particulier non limitatif. La portion coudée permet de limiter l'encombrement, notamment la longueur du dispositif d'échange thermique 7. Toute autre forme adéquate permettant un écoulement turbulent du fluide décontaminé F' au sein du canal de circulation 21 et permettant d'optimiser l'échange thermique avec le fluide contaminé F statique dans l'enceinte 19, peut être envisagée.

De façon avantageuse, le canal de circulation 21 présente une seule section de passage ou voie de circulation pour le fluide décontaminé F'. En particulier, le canal de circulation 21 est conformé de manière à délimiter un trajet du fluide décontaminé F' chauffé en une seule passe. Ceci permet de garantir une vitesse de passage optimisée et un encrassement réduit du canal de circulation 21. En effet, avec plusieurs voies ou sections de passage possibles pour le fluide décontaminé F' à travers le canal de circulation 21, un encrassement de l'une des voies risquerait de ne pas être détecté tant qu'une autre voie reste libre pour l'écoulement du fluide décontaminé F'. En outre, il pourrait s'avérer compliqué de nettoyer une telle voie encrassée, car un produit de lavage ou désinfectant risquerait également de passer par la voie libre et non par la voie encrassée. Un tel encrassement limiterait de façon importante l'échange thermique. Au contraire, avec une seule voie pour la circulation du fluide décontaminé F' dans le canal de circulation 21, un encrassement peut être détecté très vite et un produit de lavage ou désinfectant peut être forcé à travers cette voie du canal de circulation 21.

En outre, le débit du fluide décontaminé F' dynamique peut être régulé, limité. Cette régulation de débit est avantageusement prévue de façon à réduire le débit de vidange, d'évacuation du fluide décontaminé F' afin d'avoir un temps de contact et donc un temps d'échange thermique entre le fluide contaminé F et le fluide décontaminé F' qui soit suffisant au sein du dispositif d'échange thermique 7.

Cette régulation ou limitation peut se faire en générant une perte de charge en sortie du canal de circulation 21, créant une pression dynamique.

A cet effet, au moins un élément de régulation 25 du débit du fluide décontaminé F' peut être disposé en sortie du canal de circulation 21.

Selon un exemple de réalisation, il peut s'agir d'une vanne de régulation disposée dans une canalisation d'évacuation 500 raccordée fluidiquement à la sortie S21 du canal de circulation 21. La vanne de régulation peut par exemple prendre une position partiellement fermée pour réduire la section de passage du fluide, ce qui permet de réguler le débit du fluide décontaminé F' évacué. En alternative, il peut s'agir d'un élément fixe permettant de réduire la section de passage du fluide décontaminé F' en sortie du canal de circulation 21, tel qu'une rondelle percée (non représentée). La rondelle percée présente un orifice de passage du fluide de diamètre inférieur au diamètre du canal de circulation 21 par exemple lorsqu'il est de forme tubulaire. Selon un exemple de réalisation particulier, pour une cuve de traitement thermique 9 avec un volume de stockage de l'ordre de 10L, la régulation du débit du fluide décontaminé F' chauffé peut se faire avec une rondelle percée dont l'orifice présente dans cet exemple particulier, un diamètre de l'ordre de 1mm à 5mm, par exemple autour de 2,5mm. Cet exemple n'est pas limitatif, pour un volume de stockage plus important, par exemple de l'ordre de 100L, la vidange peut être plus rapide et en conséquence le diamètre de passage de la rondelle percée peut être plus important. Quel que soit le diamètre du canal de circulation 21 par exemple de forme tubulaire, la rondelle percée (non représentée) réduisant ce diamètre crée le plus de pertes de charges et impose le débit du fluide décontaminé F'.

Par ailleurs, selon l'exemple illustré, le canal de circulation 21 traverse l'enceinte 19. Ainsi, le canal de circulation 21 est un canal interne. L'enceinte 19 est, dans ce mode de réalisation, disposée autour du canal interne.

Selon une alternative non représentée, le canal de circulation 21 peut être externe et disposé autour de l'enceinte 19. En particulier, le dispositif d'échange thermique 7 peut être réalisé par une cuve avec une double enveloppe, la cuve formant l'enceinte 19 et l'enveloppe additionnelle autour de l'enveloppe périphérique de la cuve permettant de délimiter le canal de circulation 21.

Selon le mode de réalisation illustré sur toutes les figures, l'unité de décontamination 5 et le dispositif d'échange thermique 7 sont réalisés par deux systèmes différents.

Selon une alternative non représentée, le dispositif d'échange thermique 7 peut être réalisé par une autre unité de décontamination 5. Plus précisément, l'installation de décontamination 1 peut comprendre au moins deux unités de décontamination 5, chacune formant également un dispositif d'échange thermique 7. Aucun échangeur thermique supplémentaire n'est requis pour permettre la récupération d'énergie.

Selon cette alternative, l'installation de décontamination 1 comporte au moins deux cuves configurées pour fonctionner alternativement en tant qu'enceinte 19 pour la récupération d'énergie et en tant que cuve de traitement thermique 9 pour la décontamination du fluide. De telles cuves sont nommées cuves à double fonction par la suite. Chaque unité de décontamination et déchange thermique comporte un canal de circulation agencé en contact thermique avec la cuve à double fonction, par exemple du côté extérieur de cette cuve.

La cuve de stockage 3 peut être raccordée fluidiquement à l'entrée de chaque cuve à double fonction. Un organe de contournement ou bypasse peut être agencé de façon à pouvoir diriger le fluide contaminé F en provenance de la cuve de stockage 3 alternativement vers l'une et l'autre cuve à double fonction.

Durant la phase de récupération d'énergie, le fluide décontaminé F' chauffé en sortie d'une cuve ayant agi en tant que cuve de traitement thermique 9 pour la décontamination du fluide est destiné à s'écouler dans le canal de circulation 21 en contact thermique avec l'autre cuve agissant alors en tant qu'enceinte 19 pour la récupération d'énergie, et inversement.

Par ailleurs, l'installation de décontamination 1 peut éventuellement comporter un dispositif de refroidissement (non représenté) agencé en aval du canal de circulation 21 selon le sens d'écoulement du fluide décontaminé F'. Le dispositif de refroidissement peut être raccordé à un circuit de liquide de refroidissement destiné à s'écouler dans le dispositif de refroidissement pour un échange thermique avec le fluide décontaminé F' en sortie du canal de circulation 21.

En fonction de la température de rejet souhaitée, un tel dispositif de refroidissement n'est pas forcément nécessaire, ce qui permet d'éviter une consommation additionnelle de liquide de refroidissement.

Enfin, l'unité de contrôle (non représentée) est configurée pour piloter un ou plusieurs éléments de l'installation de décontamination 1.

L'unité de contrôle (non représentée) est configurée pour piloter la décontamination du fluide, et commander notamment le dispositif de chauffage 11. Elle peut de plus commander une ou plusieurs vannes V, V', V1, V2 telles que précédemment décrites, de façon à diriger l'écoulement de fluide. Elle peut encore commander l'élément déverseur 23, ou encore l'élément de régulation 25.

En particulier, l'unité de contrôle (non représentée) permet de commander la mise en œuvre de la phase de récupération d'énergie, de façon à réchauffer le fluide contaminé F statique contenu dans l'enceinte 19. Pour ce faire, l'unité de contrôle (non représentée) peut commander les première et deuxième vannes V1, V2, de façon à isoler fluidiquement l'enceinte 19 remplie de fluide contaminé F, et commander la vanne de vidange V pour évacuer le fluide décontaminé F' chauffé en sortie de la cuve de traitement thermique 9 à travers le canal de circulation 21.

Par ailleurs, selon l'alternative avec au moins deux unités de décontamination et d'échange thermique, l'unité de contrôle est configurée pour commander alternativement l'alimentation en fluide contaminé F des cuves à double fonction.

### PROCEDE

On décrit ci-après un exemple de procédé de décontamination avec une phase de récupération d'énergie, mis en œuvre par l'installation de décontamination 1. Une ou plusieurs étapes décrites ci-après peuvent être commandées par l'unité de contrôle.

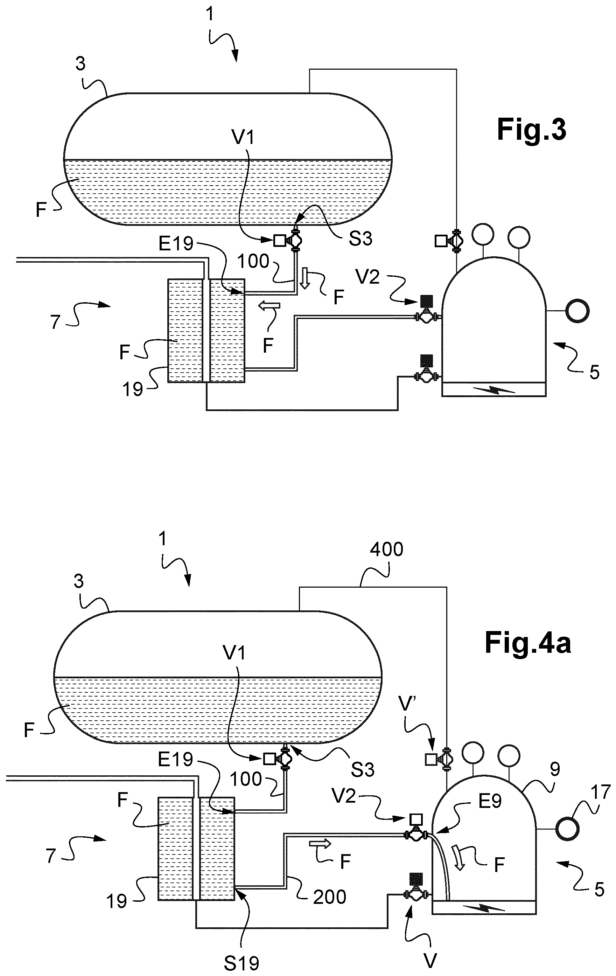

En référence à la figure 3, en situation initiale, l'installation de décontamination 1 est arrêtée. La cuve de stockage 3 est remplie d'un fluide, tel qu'un liquide, contaminé F. La cuve de stockage 3 est par exemple remplie à un niveau suffisant pour déclencher un cycle de décontamination.

Le procédé comporte une étape de remplissage de l'enceinte 19, selon le principe des vases communicants, avec le fluide contaminé F en provenance de la cuve de stockage 3. Pour ce faire, la première vanne V1 est par exemple dans la position ouverte.

En référence à la figure 4a, le procédé comporte une étape de remplissage de la cuve de traitement thermique 9, selon le principe des vases communicants avec le fluide contaminé F en provenance de l'enceinte 19. Pour ce faire, la deuxième vanne V2, initialement en position fermée, passe dans la position ouverte. A l'inverse, la vanne de vidange V est dans une position fermée. Le fluide contaminé F contenu dans l'enceinte 19 est poussé vers la cuve de traitement thermique 9 par le fluide contaminé F en provenance de la cuve de stockage 3 qui est au-dessus.

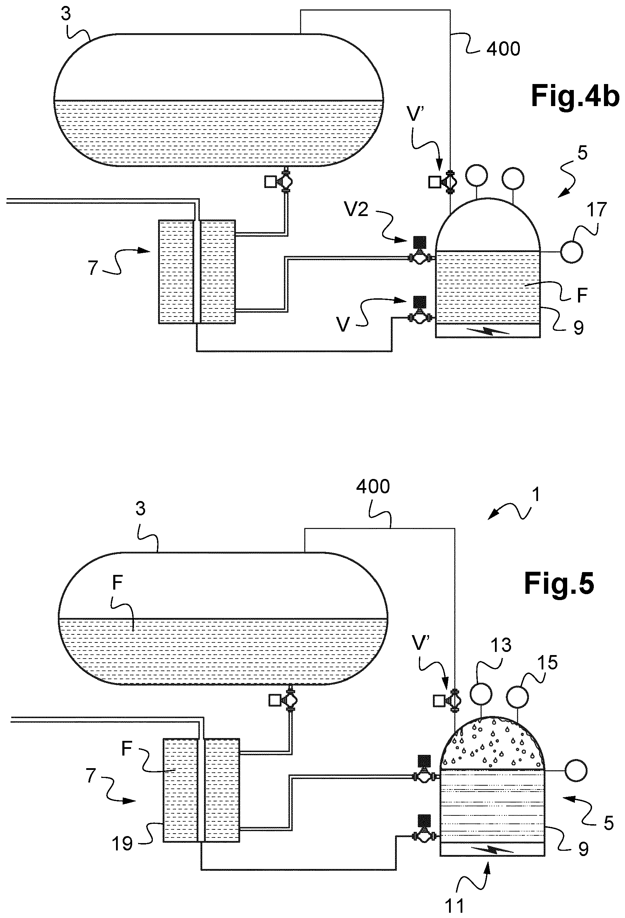

Comme illustré sur la figure 4b, le remplissage peut se faire jusqu'au niveau prédéterminé, se situant par exemple au niveau du capteur de remplissage 17, en laissant un volume gazeux de compression à l'intérieur de la cuve de traitement thermique 9 au niveau du dôme. La deuxième vanne V2 peut alors être fermée.

Pendant cette étape de remplissage, un surplus de volume gazeux dans la cuve de traitement thermique 9 peut être évacué via la canalisation de délestage d'air 400 vers la cuve de stockage 3. La vanne de sécurité V' est dans une position ouverte à cet effet.

Lors de la première itération de remplissage de la cuve de traitement thermique 9, il n'y pas de récupération d'énergie mise en œuvre au niveau du dispositif d'échange thermique 7, de sorte que le fluide contaminé F n'est pas préchauffé.

Puis, le procédé comporte une étape de chauffe du fluide contenu à l'intérieur de la cuve de traitement thermique 9, afin de le décontaminer comme schématisé en figure 5. A cet effet, le dispositif de chauffage 11 est activé. Il s'agit par exemple d'alimenter un ou plusieurs éléments chauffants électriques, ou selon un autre exemple d'injecter de la vapeur d'eau à une pression via un injecteur (non représenté).

Cette étape de chauffe se fait généralement à une température par exemple comprise entre 121°C et 140°C, pendant une durée comprise par exemple inférieure à 10mn, notamment inférieure à 5mn, voire inférieure à 3mn, en laissant augmenter la pression dans la cuve de traitement thermique 9, par exemple autour de 2barg à 4,5barg (bars relatifs ou bars jauge), c'est-à-dire autour de 3 à 5,5 bars absolus. La température et la pression au sein de la cuve de traitement thermique 9 peuvent être surveillés à l'aide des capteurs de température 13 et de pression 15. Un trop plein de pression peut être évacuée via la canalisation de délestage d'air 400 dans la cuve de stockage 3.

Ensuite, le dispositif de chauffage 11 est arrêté. La vanne de sécurité V' peut prendre une position fermée. La vanne de vidange V est également dans une position fermée. De la condensation se forme à l'intérieur de la cuve de traitement thermique 9 et plus particulièrement au niveau du dôme. L'enceinte 19 étant remplie de fluide contaminé F en provenance de la cuve de stockage 3, et le fluide contenu dans la cuve de traitement thermique 9 étant décontaminé par chauffage, la phase de récupération d'énergie peut être mise en œuvre.

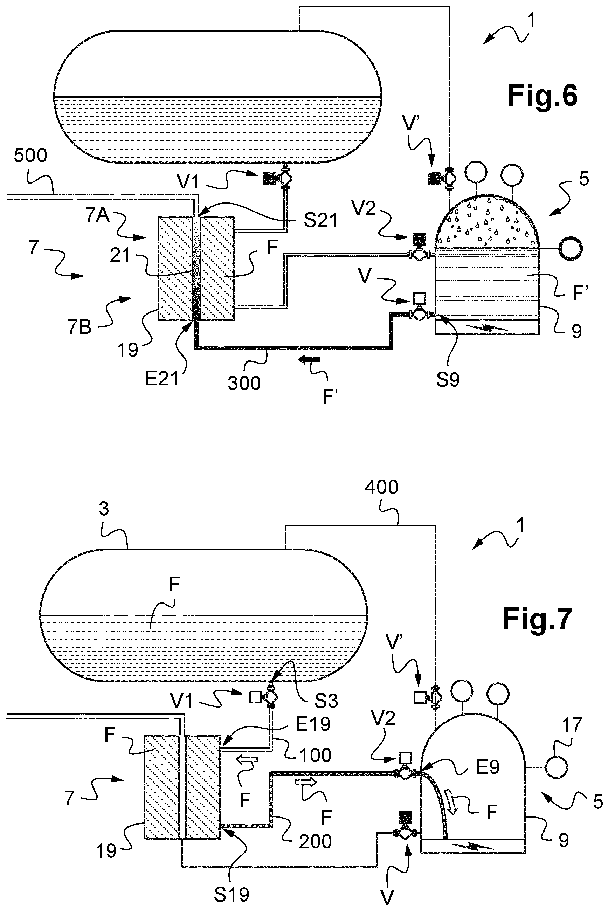

Pour ce faire, en référence à la figure 6, l'enceinte 19 est isolée fluidiquement. Les première et deuxième vannes V1, V2 sont par exemple commandées pour prendre la position fermée. Et, le fluide décontaminé F' est évacué à chaud de la cuve de traitement thermique 9 à travers le canal de circulation 21. Le fluide décontaminé F' peut être évacué à l'aide de la pression résiduelle à l'intérieur de la cuve de traitement thermique 9. Cette étape d'évacuation ne nécessite pas l'utilisation d'une pompe qui ne permettrait pas une vidange à chaud.

Le fluide décontaminé F' entre en partie basse du canal de circulation 21. Lors de l'écoulement du fluide décontaminé F', la chaleur dégagée par ce dernier permet un préchauffage du fluide contaminé F contenu dans l'enceinte 19. Le fluide contaminé F préchauffé dans l'enceinte 19 peut atteindre une température supérieure à 90°C.

L'augmentation de la température au sein de l'enceinte 19, fermée, isolée fluidiquement, amène par dilatation thermique une pression statique dans cette enceinte 19. L'augmentation de la pression statique est limitée par l'élément déverseur, tel qu'une soupape, précédemment décrit.

Le fluide décontaminé F' ressort en partie haute du canal de circulation 21 en étant refroidi. Il a été constaté une température du fluide décontaminé F' en sortie de canal de circulation 21, par exemple inférieure à 50°C.

Il peut éventuellement s'en suivre une étape additionnelle de refroidissement du fluide décontaminé F' par circulation à travers un dispositif de refroidissement (non représenté) en aval du canal de circulation 21 selon le sens d'écoulement du fluide décontaminé F'.

Un nouveau cycle de décontamination peut ensuite être mis en œuvre.

Pour ce faire, les première et deuxième vannes V1, V2 sont ouvertes de manière à remplir de nouveau la cuve de traitement thermique 9 avec le fluide contaminé F préchauffé en provenance de l'enceinte 19, comme schématisé sur la figure 7, jusqu'à atteindre le niveau de remplissage prédéterminé. Les différentes étapes du procédé précédemment décrites en référence aux figures 4a à 6 sont réitérées.

L'enceinte 19 et la cuve de traitement thermique 9 définissant un volume de stockage similaire, lorsque le fluide contaminé F préchauffé atteint le niveau de remplissage prédéterminé, l'enceinte 19 est de nouveau remplie de fluide contaminé F froid en provenance de la cuve de stockage 3. Le préchauffage du fluide contaminé F remplissant la cuve de traitement thermique 9 permet de limiter la durée de remontée en température lors de l'étape de chauffe, ce qui permet d'accélérer le processus de décontamination et de diminuer la consommation énergétique du nouveau cycle de décontamination.

Enfin, lors du dernier cycle de décontamination, toutes les étapes du procédé peuvent être répétées de sorte que le fluide à décontaminer bénéficie du préchauffage au sein du dispositif d'échange thermique par récupération de l'énergie du fluide décontaminé F' lors du cycle de décontamination précédent.

Par ailleurs, le procédé décrit ci-dessus s'applique également pour une installation de décontamination 1 selon la variante de réalisation avec deux unités servant à la fois pour la décontamination et l'échange thermique lors de la phase de récupération d'énergie.

Dans ce cas, les cuves à double fonction sont remplies alternativement avec le fluide contaminé F en provenance de la cuve de stockage 3. Lorsqu'une première cuve finit un cycle de décontamination, le fluide décontaminé F' dans cette première cuve est évacué en passant par le canal de circulation 21, par exemple défini par une double enveloppe de la deuxième cuve contenant du fluide contaminé F. Puis, un cycle de décontamination est mis en œuvre dans cette deuxième cuve pendant que la première cuve se remplit de nouveau de fluide contaminé F froid, qui sera à son tour préchauffé par le fluide décontaminé F' en sortie de la deuxième cuve.

Enfin, l'ordre de certaines étapes du procédé décrit ci-dessus peut être interverti sans sortir du cadre de la présente invention.

Ainsi, l'installation de décontamination 1, selon l'une ou l'autre des variantes décrites, munie du dispositif d'échange thermique 7 permet une décontamination efficace avec une récupération d'énergie valorisée.

L'enceinte 21 permet d'emprisonner un volume de fluide à décontaminer, correspondant au volume de stockage de la cuve de traitement thermique 9, qui est réchauffé en vidangeant la cuve de traitement thermique 9 à travers le canal de circulation 21, avant d'être transféré dans la cuve de traitement thermique 9.

L'échange thermique, au sein du dispositif d'échange thermique 7, est optimisé grâce à la combinaison de la convection naturelle du fluide contaminé F dans l'enceinte 19, la convection forcée du fluide décontaminé F' en mouvement et turbulent dans le canal de circulation 21, et enfin la conduction à travers la paroi du canal de circulation 21 ou de l'enceinte 19. Le Déposant a constaté une récupération d'énergie autour de 66% par rapport à aux solutions antérieures.

La récupération d'énergie ne modifie pas le fonctionnement automatique de l'unité de décontamination 5. Elle ne nécessite pas non plus une synchronisation entre plusieurs éléments, notamment entre deux cuves de traitement thermique pour synchroniser le remplissage de l'une et la vidange de l'autre. Au contraire, le remplissage et la vidange de la cuve de traitement 3 sont séquencées. Ceci permet de s'affranchir de contraintes sur le temps et le débit de remplissage, contrairement aux solutions avec synchronisation, de l'art antérieur.

De plus, la maintenance d'une telle installation 1 est aisée et ne présente pas de difficultés particulières.

L'installation de décontamination 1 peut aussi comprendre plusieurs cuves de traitement thermique, mais dans ce cas, elles sont autonomes sans besoin d'être synchronisées les unes aux autres. Aucun élément supplémentaire pour un échange thermique entre le fluide contaminé et le fluide décontaminé chauffé n'est requis.

De plus, seuls des éléments passifs sont nécessaires pour former le dispositif d'échange thermique 7 et mettre en œuvre la phase de récupération d'énergie. En particulier il est possible de se passer d'une pompe pour le transfert de fluide.

Enfin, avec une telle installation 1, même le dernier cycle de décontamination peut bénéficier d'une récupération d'énergie pour préchauffer le fluide à décontaminer.

## Revendications

1. Procédé de décontamination d'un fluide, tel qu'un liquide, contaminé par des agents potentiellement pathogènes au sein d'une installation de décontamination (1), **caractérisé en ce que** :
- l'installation de décontamination (1) comprend :
• au moins une cuve de stockage (3) du fluide contaminé (F),
• une unité de décontamination (5) comprenant au moins une cuve de traitement thermique (9) et un dispositif de chauffage (11) du fluide contaminé (F) contenu dans la cuve de traitement thermique (9),
• un dispositif d'échange thermique (7) entre le fluide contaminé (F) et le fluide décontaminé (F') chauffé, comportant d'une part une enceinte (19) raccordée fluidiquement à la cuve de stockage (3), l'enceinte (19) définissant un volume de stockage égal ou sensiblement égal au volume de stockage défini par la cuve de traitement thermique (9), et d'autre part un canal de circulation (21) de fluide, raccordé fluidiquement à une sortie de fluide (S9) de la cuve de traitement thermique (9) et agencé en contact thermique avec l'enceinte (19), et
• une unité de contrôle configurée pour mettre en œuvre une phase de récupération d'énergie,
- et ledit procédé comporte les étapes suivantes :
- remplir l'enceinte (19) du dispositif d'échange thermique (7) avec le fluide contaminé (F) en provenance de la cuve de stockage (3),
- remplir la cuve de traitement thermique (9) avec le fluide contaminé (F) en provenance de l'enceinte (19) du dispositif d'échange thermique (7) ou de la cuve de stockage (3),
- chauffer le fluide contaminé (F) contenu à l'intérieur de la cuve de traitement thermique (9) jusqu'à atteindre une température prédéfinie, pendant une durée prédéfinie, de façon à décontaminer ledit fluide,
- activer une phase de récupération d'énergie de ladite installation comprenant les sous-étapes suivantes :
• isoler fluidiquement l'enceinte (19) remplie de fluide contaminé (F) et
• évacuer le fluide chauffé décontaminé en sortie de la cuve de traitement thermique (9) à travers le canal de circulation (21) du dispositif d'échange thermique (7), agencé en contact thermique avec l'enceinte (19), de façon à réchauffer le fluide contaminé (F) contenu dans l'enceinte (19) par le fluide décontaminé chauffé,
- remplir la cuve de traitement thermique (9) avec le fluide contaminé (F) préchauffé au sein de l'enceinte (19) du dispositif d'échange thermique (7) lors de la phase de récupération d'énergie.

2. Installation de décontamination (1) d'un fluide, tel qu'un liquide, contaminé par des agents potentiellement pathogènes, configurée pour mettre en œuvre ledit procédé selon la revendication 1, ladite installation (1) comprenant au moins :
- une cuve de stockage (3) du fluide contaminé (F),
- une unité de décontamination (5) comprenant au moins une cuve de traitement thermique (9) configurée pour recevoir le fluide contaminé (F) et un dispositif de chauffage (11) du fluide contaminé (F) contenu dans la cuve de traitement thermique (9), de façon à décontaminer ledit fluide, et
- un dispositif d'échange thermique (7) entre le fluide contaminé (F) et le fluide décontaminé (F') chauffé,
- **caractérisée en ce que :**
- le dispositif d'échange thermique (7) comporte
• d'une part une enceinte (19) raccordée fluidiquement à la cuve de stockage (3), de façon à être remplie par le fluide contaminé (F) en provenance de la cuve de stockage (3), l'enceinte (19) définissant un volume de stockage égal ou sensiblement égal au volume de stockage défini par la cuve de traitement thermique (9), et
• d'autre part un canal de circulation (21) de fluide, raccordé fluidiquement à une sortie de fluide (S9) de la cuve de traitement thermique (9) et agencé en contact thermique avec l'enceinte (19), **et en ce que**
- ladite installation (1) comporte une unité de contrôle configurée pour mettre en œuvre une phase de récupération d'énergie, en isolant fluidiquement l'enceinte (19) remplie de fluide contaminé (F) et en évacuant le fluide décontaminé (F') chauffé en sortie de la cuve de traitement thermique (9) à travers le canal de circulation (21), de façon à réchauffer le fluide contaminé (F) contenu dans l'enceinte (19), et
- ladite installation comporte au moins une première vanne (V1) agencée en communication fluidique avec une entrée de fluide (E19) de l'enceinte (19) et une deuxième vanne (V2) agencée en communication fluidique avec une sortie de fluide (S19) de l'enceinte (19), lesdites vannes (V1, V2) étant configurées pour prendre une position fermée isolant fluidiquement l'enceinte (19), lors de la phase de récupération d'énergie.

3. Installation de décontamination (1) selon la revendication précédente, dans laquelle :
- le dispositif d'échange thermique (7) présente une première partie (7A), dite haute, disposée en hauteur par rapport à une deuxième partie (7B), dite basse, et
- le canal de circulation (21) présente une entrée de fluide (E21) ménagée dans la deuxième partie (7B) basse et une sortie de fluide (S21) ménagée dans la première partie (7A) haute.

4. Installation de décontamination (1) selon l'une des revendications 2 ou 3, comprenant au moins un élément déverseur (23) raccordé fluidiquement à l'enceinte (19) et à la cuve de stockage (3), en étant agencé en dérivation de la première vanne (V1), l'élément déverseur (23) étant configuré pour prendre une position autorisant un déversement d'un surplus de fluide contaminé (F) contenu dans l'enceinte (19), en cas de dilatation dudit fluide (F) lors de la phase de récupération d'énergie.

5. Installation de décontamination (1) selon la revendication précédente, dans laquelle l'élément déverseur (23) est une soupape.

6. Installation de décontamination (1) selon l'une des revendications 2 à 5, comportant au moins un élément de régulation (25) du débit du fluide décontaminé (F') en sortie du canal de circulation (21) du dispositif d'échange thermique (7).

7. Installation de décontamination (1) selon la revendication 6, dans laquelle l'élément de régulation (25) est une vanne de régulation.

8. Installation de décontamination (1) selon la revendication 6, dans laquelle l'élément de régulation est un élément fixe réduisant la section de passage du fluide décontaminé (F').

9. Installation de décontamination (1) selon l'une des revendications 2 à 8, dans laquelle la cuve de stockage (3) est disposée en hauteur par rapport à l'enceinte (19) du dispositif d'échange thermique (7) et à la cuve de traitement thermique (9), de sorte que la circulation du fluide contaminé (F) en provenance de la cuve de stockage (3) et en direction de l'enceinte (19) et/ou de la cuve de traitement thermique (9) est réalisée au moins en partie par gravité.

10. Installation de décontamination (1) selon l'une des revendications 2 à 9, dans laquelle :
- l'enceinte (19) est disposée en amont de la cuve de traitement thermique (9) selon le sens de circulation du fluide contaminé (F), et
- la cuve de traitement thermique (9) est raccordée fluidiquement à l'enceinte (19) et est configurée pour être remplie par le fluide contaminé (F) en provenance de l'enceinte (19).

11. Installation de décontamination (1) selon l'une des revendications 2 à 10, dans laquelle le canal de circulation (21) est un canal interne traversant l'enceinte (19).

12. Installation de décontamination (1) selon l'une des revendications 2 à 10, dans laquelle le canal de circulation (21) est un canal externe disposé autour de l'enceinte (19).

13. Installation de décontamination (1) selon l'une des revendications 2 à 12, dans laquelle le canal de circulation (21) présente une seule section de passage du fluide décontaminé (F').

14. Installation de décontamination (1) selon l'une des revendications 2 à 13, dans laquelle l'unité de décontamination (5) et le dispositif d'échange thermique (7) sont différents.

## Patentansprüche

1. Dekontaminationsverfahren zum Dekontaminieren eines Fluids, wie einer Flüssigkeit, das durch potentielle Krankheitserreger kontaminiert ist, in einer Dekontaminationsanlage (1), **dadurch gekennzeichnet, dass**:
- die Dekontaminationsanlage (1) umfasst:
• mindestens ein Speichergefäß (3) zum Speichern des kontaminierten Fluids (F),
• eine Dekontaminationseinheit (5), umfassend mindestens ein Wärmebehandlungsgefäß (9) und eine Heizvorrichtung (1) zum Aufheizen des kontaminierten Fluids (F), das in dem Wärmebehandlungsgefäß (9) enthalten ist,
• eine Wärmetauschvorrichtung (7) zum Wärmetauschen zwischen dem kontaminierten Fluid (F) und dem aufgeheizten dekontaminierten Fluid (F'), aufweisend einerseits ein Gehäuse (19), das mit dem Speichergefäß (3) fluidisch verbunden ist, wobei das Gehäuse (19) ein Speichervolumen definiert, das gleich oder im Wesentlichen gleich dem Speichervolumen ist, das von dem Wärmebehandlungsgefäß (9) definiert ist, und andererseits einen Fluid-Zirkulationskanal (21), der mit einem Fluidauslass (S9) des Wärmebehandlungsgefäßes (9) fluidisch verbunden ist und in thermischem Kontakt mit dem Gehäuse (19) angeordnet ist, und
• eine Kontrolleinheit, die zum Durchführen einer Energierückgewinnungsphase ausgebildet ist,
- und wobei das Verfahren die folgenden Schritte aufweist:
- Befüllen des Gehäuses (19) des Wärmebehandlungsgefäßes (7) mit dem kontaminierten Fluid (F) aus dem Speichergefäß (3),
- Befüllen des Wärmebehandlungsgefäßes (9) mit dem kontaminierten Fluid (F) aus dem Gehäuse (19) der Wärmetauschvorrichtung (7) oder dem Speichergefäß (3),
- Aufheizen des kontaminierten Fluids (F), das in dem Wärmebehandlungsgefäß (9) enthalten ist, bis zum Erreichen einer vorab definierten Temperatur, über einen vorab definierten Zeitraum, um das Fluid zu dekontaminieren,
- Aktivieren einer Energierückgewinnungsphase der Anlage, die die folgenden Teilschritte umfasst:
• fluidisches Isolieren des mit dem kontaminierten Fluid (F) befüllten Gehäuses (19) und
• Ableiten des dekontaminierten aufgeheizten Fluids am Auslass des Wärmebehandlungsgefäßes (9) durch den Zirkulationskanal (21) der Wärmetauschvorrichtung (7), der in thermischem Kontakt mit dem Gehäuse (19) angeordnet ist, um das kontaminierte Fluid (F), das in dem Gehäuse (19) enthalten ist, durch das aufgeheizte dekontaminierte Fluid wiederaufzuheizen,
• Befüllen des Wärmebehandlungsgefäßes (9) mit dem kontaminierten Fluid (F), das in dem Gehäuse (19) der Wärmetauschvorrichtung (7) in der Energierückgewinnungsphase vorab aufgeheizt wurde.

2. Dekontaminationsanlage (1) zum Dekontaminieren eines Fluids, wie einer Flüssigkeit, das durch potentielle Krankheitserreger kontaminiert ist, ausgebildet zum Durchführen des Verfahrens nach Anspruch 1, wobei die Anlage (1) mindestens umfasst:
- ein Speichergefäß (3) zum Speichern des kontaminierten Fluids (F),
- eine Dekontaminationseinheit (5), umfassend mindestens ein Wärmebehandlungsgefäß (9), das zum Aufnehmen des kontaminierten Fluids (F) ausgebildet ist, und eine Heizvorrichtung (11) zum Aufheizen des kontaminierten Fluids (F), das in dem Wärmebehandlungsgefäß (9) enthalten ist, um das Fluid zu dekontaminieren, und
- eine Wärmetauschvorrichtung (7) zum Wärmetauschen zwischen dem kontaminierten Fluid (F) und dem aufgeheizten dekontaminierten Fluid (F'),
- **dadurch gekennzeichnet, dass:**
- die Wärmetauschvorrichtung (7) aufweist
• einerseits ein Gehäuse (19), das mit dem Speichergefäß (3) fluidisch verbunden ist, um mit dem kontaminierten Fluid (F) aus dem Speichergefäß (3) befüllt zu werden, wobei das Gehäuse (19) ein Speichervolumen definiert, das gleich oder im Wesentlichen gleich dem Speichervolumen ist, das von dem Wärmebehandlungsgefäß (9) definiert ist, und
• andererseits einen Fluid-Zirkulationskanal (21), der mit einem Fluidauslass (S9) des Wärmebehandlungsgefäßes (9) fluidisch verbunden ist und in thermischem Kontakt mit dem Gehäuse (19) angeordnet ist, **und dass**
- die Anlage (1) eine Kontrolleinheit aufweist, die zum Durchführen einer Energierückgewinnungsphase ausgebildet ist, indem sie das Gehäuse (19) von kontaminiertem Fluid (F) fluidisch isoliert und indem sie das aufgeheizte dekontaminierte Fluid (F') am Auslass des Wärmebehandlungsgefäßes (9) durch den Zirkulationskanal (21) ableitet, um das kontaminierte Fluid (F), das in dem Gehäuse (19) enthalten ist, wiederaufzuheizen, und die Anlage aufweist: mindestens einen ersten Schieber (V1), der mit einem Fluideinlass (E19) des Gehäuses (19) in fluidischer Verbindung angeordnet ist, und einen zweiten Schieber (V2), der mit einem Fluidauslass (S19) des Gehäuses (19) in fluidischer Verbindung angeordnet ist, wobei die Schieber (V1, V2) dazu ausgebildet sind, in der Energierückgewinnungsphase eine geschlossene Position einzunehmen, die das Gehäuse (19 fluidisch isoliert.

3. Dekontaminationsanlage (1) nach dem vorhergehenden Anspruch, wobei:
- die Wärmetauschvorrichtung (7) einen ersten, so genannten oberen, Teil (7A) aufweist, der relativ zu einem zweiten, so genannten, unteren Teil (7B), oben angeordnet ist, und
- der Zirkulationskanal (21) aufweist: einen Fluideinlass (E21), der in dem unteren zweiten Teil (7B) vorgesehen ist, und einen Fluidauslass (S21), der in dem oberen ersten Teil (7A) vorgesehen ist.

4. Dekontaminationsanlage (1) nach einem der Ansprüche 2 oder 3, umfassend mindestens ein Überströmelement (23), das mit dem Gehäuse (19) und dem Speichergefäß (3) fluidisch verbunden ist, indem es von dem ersten Ventil (V1) abzweigt, wobei das Überströmelement (23), ausgebildet ist, um eine Position einzunehmen, die eine Ableitung eines Überschusses an kontaminierten Fluid (F), das in dem Gehäuse (19) enthalten ist, für den Fall einer Ausdehnung des Fluids (F) in der Energierückgewinnungsphase gestattet.

5. Dekontaminationsanlage (1) nach dem vorhergehenden Anspruch, wobei das Überströmelement (23) ein Ventil ist.

6. Dekontaminationsanlage (1) nach einem der Ansprüche 2 bis 5, mindestens aufweisend ein Regelelement (25) zum Regeln der Durchflussmenge des dekontaminierten Fluids (F') am Ausgang des Zirkulationskanals (21) der Wärmetauschvorrichtung (7).

7. Dekontaminationsanlage (1) nach Anspruch 6, wobei das Regelelement (25) ein Regelventil ist.

8. Dekontaminationsanlage (1) nach Anspruch 6, wobei das Regelelement (25) ein ortsfestes Organ ist, das den Durchtrittsquerschnitt für das dekontaminierte Fluid (F') reduziert.

9. Dekontaminationsanlage (1) nach einem der Ansprüche 2 bis 8, wobei das Speichergefäß (3) relativ zu dem Gehäuse (19) der Wärmetauschvorrichtung (7) und zu dem Wärmebehandlungsgefäß (9) oben angeordnet ist, so dass die Zirkulation des kontaminierten Fluids (F) aus dem Speichergefäß (3) und in Richtung des Gehäuses (19) und/oder des Wärmebehandlungsgefäßes (9) mindestens zum Teil schwerkraftbedingt erfolgt.

10. Dekontaminationsanlage (1) nach einem der Ansprüche 2 bis 9, wobei:
- das Gehäuse (19) gemäß der Zirkulationsrichtung des kontaminierten Fluids (F) stromaufwärts zu dem Wärmebehandlungsgefäß (9) angeordnet ist und
- das Wärmebehandlungsgefäß (9) mit dem Gehäuse (19) fluidisch verbunden ist und dazu ausgebildet ist, mit dem kontaminierten Fluid (F) aus dem Gehäuse (19) befüllt zu werden.

11. Dekontaminationsanlage (1) gemäß Anspruch 2 bis 10, wobei der Zirkulationskanal (21) ein interner Kanal ist, der das Gehäuse (19) durchquert.

12. Dekontaminationsanlage (1) nach einem der Ansprüche 2 bis 10, wobei der Zirkulationskanal (21) ein externer Kanal ist, der um das Gehäuse (19) herum angeordnet ist.

13. Dekontaminationsanlage (1) nach einem der Ansprüche 2 bis 12, wobei der Zirkulationskanal (21) einen einzigen Durchtrittsquerschnitt für das dekontaminierte Fluid (F') aufweist.

14. Dekontaminationsanlage (1) nach einem der Ansprüche 2 bis 13, wobei die Dekontaminationseinheit (5) und die Wärmetauschvorrichtung (7) verschieden sind.

## Claims

1. Process for decontaminating a fluid, such as a liquid, contaminated by potentially pathogenic agents within a decontamination facility (1), **characterized in that**:
- the decontamination facility (1) comprises:
• at least one tank (3) for storing the contaminated fluid (F),
• a decontamination unit (5) comprising at least one heat treatment tank (9) and a device (11) for heating the contaminated fluid (F) contained in the heat treatment tank (9),
• a device (7) for heat exchange between the contaminated fluid (F) and the heated decontaminated fluid (F'), comprising, on the one hand, a chamber (19) fluidically connected to the storage tank (3), the chamber (19) defining a storage volume equal or substantially equal to the storage volume defined by the heat treatment tank (9), and on the other hand a fluid circulation channel (21), fluidically connected to a fluid outlet (S9) of the heat treatment tank (9) and arranged in thermal contact with the chamber (19), and
• a control unit configured to implement an energy recovery phase,
- and said process comprises the following steps:
- filling the chamber (19) of the heat exchange device (7) with the contaminated fluid (F) originating from the storage tank (3),
- filling the heat treatment tank (9) with the contaminated fluid (F) originating from the chamber (19) of the heat exchange device (7) or from the storage tank (3),
- heating the contaminated fluid (F) contained within the heat treatment tank (9) until a predefined temperature is reached, for a predefined duration, so as to decontaminate said fluid,
- activating an energy recovery phase of said facility comprising the following sub-steps:
• fluidically isolating the chamber (19) filled with contaminated fluid (F) and
• discharging the heated decontaminated fluid at the outlet of the heat treatment tank (9) through the circulation channel (21) of the heat exchange device (7), arranged in thermal contact with the chamber (19), so as to heat the contaminated fluid (F) contained in the chamber (19) with the heated decontaminated fluid,
- filling the heat treatment tank (9) with the contaminated fluid (F) preheated within the chamber (19) of the heat exchange device (7) during the energy recovery phase.

2. Facility (1) for decontaminating a fluid, such as a liquid, contaminated by potentially pathogenic agents, configured to implement said process according to Claim 1, said facility (1) comprising at least:
- a tank (3) for storing the contaminated fluid (F),
- a decontamination unit (5) comprising at least one heat treatment tank (9) configured to receive the contaminated fluid (F) and a device (11) for heating the contaminated fluid (F) contained in the heat treatment tank (9), so as to decontaminate said fluid, and
- a device (7) for heat exchange between the contaminated fluid (F) and the heated decontaminated fluid (F'),
- **characterized in that**:
- the heat exchange device (7) comprises
• on the one hand, a chamber (19) fluidically connected to the storage tank (3), so as to be filled with the contaminated fluid (F) originating from the storage tank (3), the chamber (19) defining a storage volume equal or substantially equal to the storage volume defined by the heat treatment tank (9), and
• on the other hand, a fluid circulation channel (21), fluidically connected to a fluid outlet (S9) of the heat treatment tank (9) and arranged in thermal contact with the chamber (19), and **in that**
- said facility (1) comprises a control unit configured to implement an energy recovery phase, by fluidically isolating the chamber (19) filled with contaminated fluid (F) and by discharging the heated decontaminated fluid (F') at the outlet of the heat treatment tank (9) through the circulation channel (21), so as to heat the contaminated fluid (F) contained in the chamber (19), and
- said facility comprises at least a first valve (V1) arranged in fluidic communication with a fluid inlet (E19) of the chamber (19) and a second valve (V2) arranged in fluidic communication with a fluid outlet (S19) of the chamber (19), said valves (V1, V2) being configured to adopt a closed position fluidically isolating the chamber (19), during the energy recovery phase.

3. Decontamination facility (1) according to the preceding claim, in which:
- the heat exchange device (7) has a first part (7A), referred to as the top part, positioned higher up relative to a second part (7B), referred to as the bottom part, and
- the circulation channel (21) has a fluid inlet (E21) formed in the second, bottom part (7B) and a fluid outlet (S21) formed in the first, top part (7A).

4. Decontamination facility (1) according to either of Claims 2 and 3, comprising at least one overflow element (23) fluidically connected to the chamber (19) and to the storage tank (3), which is arranged in bypass of the first valve (V1), the overflow element (23) being configured to adopt a position allowing surplus contaminated fluid (F) contained in the chamber (19) to overflow in the event of expansion of said fluid (F) during the energy recovery phase.

5. Decontamination facility (1) according to the preceding claim, in which the overflow element (23) is a relief valve.

6. Decontamination facility (1) according to one of Claims 2 to 5, comprising at least one element (25) for controlling the flow rate of the decontaminated fluid (F') at the outlet of the circulation channel (21) of the heat exchange device (7).

7. Decontamination facility (1) according to Claim 6, in which the control element (25) is a control valve.

8. Decontamination facility (1) according to Claim 6, in which the control element is a fixed element reducing the flow area of the decontaminated fluid (F').

9. Decontamination facility (1) according to one of Claims 2 to 8, in which the storage tank (3) is positioned higher up relative to the chamber (19) of the heat exchange device (7) and relative to the heat treatment tank (9), so that the circulation of the contaminated fluid (F) originating from the storage tank (3) and in the direction of the chamber (19) and/or the heat treatment tank (9) is achieved at least partly by gravity.

10. Decontamination facility (1) according to one of Claims 2 to 9, in which:
- the chamber (19) is positioned upstream of the heat treatment tank (9) in the flow direction of the contaminated fluid (F), and
- the heat treatment tank (9) is fluidically connected to the chamber (19) and is configured to be filled with the contaminated fluid (F) originating from the chamber (19).

11. Decontamination facility (1) according to one of Claims 2 to 10, in which the circulation channel (21) is an internal channel passing through the chamber (19).

12. Decontamination facility (1) according to one of Claims 2 to 10, in which the circulation channel (21) is an external channel positioned around the chamber (19).

13. Decontamination facility (1) according to one of Claims 2 to 12, in which the circulation channel (21) has a single flow area of the decontaminated fluid (F').

14. Decontamination facility (1) according to one of Claims 2 to 13, in which the decontamination unit (5) and the heat exchange device (7) are different.
